**Europäisches Patentamt**

**European Patent Office**

**Office européen des brevets**

(19)

(11) Numéro de publication: **0 228 308**
**B1**

(12)

# FASCICULE DE BREVET EUROPEEN

(45) Date de publication du fascicule du brevet: **29.08.90**

(51) Int. Cl.5: **A 23 L 3/36, F 25 D 3/11**

(21) Numéro de dépôt: **86402129.0**

(22) Date de dépôt: **30.09.86**

(54) Procédé et tunnel de refroidissement superficiel de produits alimentaires.

(30) Priorité: **02.10.85 FR 8514582**

(43) Date de publication de la demande:
**08.07.87 Bulletin 87/28**

(45) Mention de la délivrance du brevet:
**29.08.90 Bulletin 90/35**

(84) Etats contractants désignés:
**AT BE CH DE FR GB IT LI LU NL SE**

(56) Documents cités:
FR-A- 613 093
FR-A-1 003 677
FR-A-1 453 906
FR-A-2 070 749
FR-A-2 133 502
FR-A-2 211 633
FR-A-2 271 521
FR-A-2 306 413
FR-A-2 398 987
FR-A-2 506 914
US-A-3 507 128
US-A-4 157 650
US-A-4 187 325

(73) Titulaire: **L'AIR LIQUIDE, SOCIETE ANONYME POUR L'ETUDE ET L'EXPLOITATION DES PROCEDES GEORGES CLAUDE**
**75, Quai d'Orsay**
**F-75321 Paris Cédex 07 (FR)**

(72) Inventeur: **Barthelmes, Patrice**
**5, rue de Carnac**
**F-78180 Montigny-le-Bretonneux (FR)**
Inventeur: **Dubreuil, Thierry**
**45, rue du Centre Val des Quatre Pignons**
**F-78650 Beynes (FR)**
Inventeur: **Ottinger, Claude**
**15, rue de la Hacquinière**
**F-91440 Bures-sur-Yvette (FR)**

(74) Mandataire: **Sadones Laurent, Renée et al**
**L'AIR LIQUIDE 75, quai d'Orsay**
**F-75321 Paris Cédex 07 (FR)**

Courier Press, Leamington Spa, England.

## Description

L'invention concerne le refroidissement superficiel de produits alimentaires, du genre où l'on soumet, dans une zone confinée isolée thermiquement de l'ambiance, lesdits produits à l'action cryogénique de particules formées par la détente de gaz carbonique sous pression et à l'état liquide au travers de buses orientées vers la surface moyenne offerte par les produits en cours de refroidissement superficiel, et du type à pulvérisation sous pression. Ce refroidissement superficiel, ou croûtage, permet de traiter ultérieurement tous les produits alimentaires, y compris les plus fragiles (brocolis, champignons...). Le cas échéant, après ce "croûtage", on procède à une surgélation en profondeur. Une telle technique de refroidissement mettant en contact les aliments avec une fine poudre d'anhydride carbonique est décrite dans le document FR 2.211.633. Toutefois, cet état antérieur de la technique, s'il décrit bien les objectifs à atteindre, ne donne pas d'instructions précises en ce qui concerne les choix dimensionnels des buses et les modalités de l'opération de saupoudrage. En outre, il op6/re coup par coup lorsqu'un produit à refroidir se présente en dessous des buses de formation de neige carbonique, ce qui est peu satisfaisant pour l'économie du procédé.

La présente invention a pour objet un procédé de ce type qui permet d'obtenir, de façon sûre, de remarquables performances en ce qui concerne le transfert thermique de la neige carbonique vers la surface du produit; en outre, le procédé de refroidissement et le matériel sont particulièrement simples et fiables, sans risque d'avarie par bouchage de conduits par des particules solides de gaz carbonique; de plus, on bénéficie d'une très grande précision grâce à une détermination correcte de température dans un tunnel de refroidissement. Ces résultats sont obtenus selon l'invention en ce qu'on assure une sublimation quasi instantanée des particules solides du gaz carbonique au contact des produits en choisissant des buses du type à pulvérisation sous pression ayant une section d'éjection comprise entre 0,2 mm² et 1,13 nm² et une pression d'éjection comprise entre 6 et 30 bars produisant un jet composite de particules solides très fines, de tailles comprises entre 20 μm et 300 μm véhiculées rapidement dans un courant gazeux exclusivement composé de gaz carbonique résultant de ladite détente, le débit et la pression de gaz carbonique étant réglés pour produire un débit de particules solides fines inférieur à 0,5 kg/h par cm² de surface de produit, la durée de traitement étant comprise entre 0,5 mn et 5 mn (minutes) et en ce que le débit de gaz carbonique sous pression et à l'état liquide est asservi à la température relevée dans ladite zone confinée, l'asservissement réalisant un débit nominal de gaz carbonique liquide pour une température relevée supérieure à une écart faible, compris entre 0,5°C et 15°C, avec une température de consigne, une réduction de débit de gaz carbonique liquide d'au moins 30% dudit débit nominal lorsque la température relevée est comprise à l'intérieur dudit écart par excès ou par défaut, un débit de gaz carbonique liquide nul pour toute température inférieure à la température de consigne d'une valeur au moins égale audit écart, avec, dans ce dernier cas, délivrance au travers des buses d'un courant gazeux de gaz carbonique.

L'ensemble de ces mesures permet d'obtenir les résultats annoncés et notamment non seulement la finesse des particules véhiculées avec le minimum de ventilation, c'est-à-dire sans moyen de brassage adjoint, assurant le dépôt d'une nappe fine de particules microniques sur les produits à refroidir qui se sublime immédiatement pour former une couche de neige, ce qui assure ipso-facto le meilleur effet de transfert thermique, mais également des conditions opératoires régulées de façon simple, sûre et suffisamment efficace pour conduire à une limitation satisfaisant de la consommation d'anhydride carbonique.

L'invention concerne également un tunnel de refroidissement superficiel de produits alimentaires, du genre comprenant un caisson d'isolation allongé avec une entrée et une sortie aux deux extrémités longitudinales, un transporteur plat, une pluralité de buses réparties en voûte dans ledit corps allongé, raccordées par conduite et vannes à un réservoir de gaz carbonique sous pression et toutes orientées vers le transporteur plat, caractérisé en ce que les dites buses ont des sections d'éjection comprise entre 0,2 et 1,13 mm² et en ce que la conduit d'alimentation en dioxide de carbone se subdivise en trois conduites en parallèle incorporant chacune une électrovanne, la première fournissant le débit nominal, la seconde étant associée à un moyen de réduction de débit 'au moins 30%, la troisième étant associée successivement, d'aval en amont à une électrovanne, à un clapet anti-retour, à un détendeur manométrique et à un réchauffeur-vaporiseur.

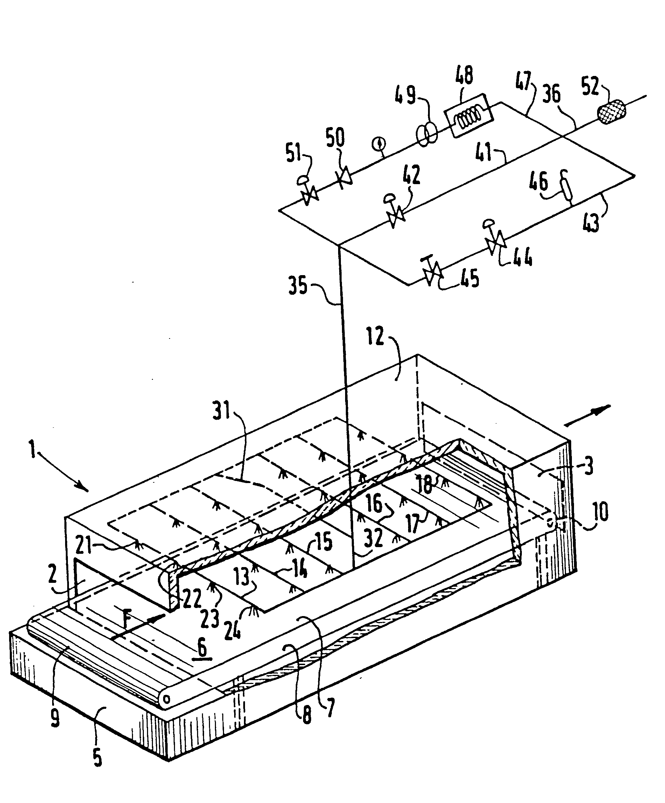

L'invention est maintenant décrite en référence aux dessins annexés dans lesquels la figure unique représente une vue en perspective avec arrachement partial d'un tunnel de réfrigération selon l'invention.

En se référant aux dessins, un tunnel comporte un caisson d'isolation allongé 1 de forme parallèpipédique rectangle avec une entrée 2 et une sortie 3 pour les produits à refroidir. Par exemple, la longueur de ce corps allongé est de 3 m, sa largeur est de 0,8 m et sa hauteur de 1,1 m. Les entrée 2 et sortie 3 ont une largeur utile de 0,3 m et une hauteur de 0,20 m.

Le corps allongé 1 se poursuit au-delà de la section d'entrée 2 de façon à former une embase-support 5 pour l'extrémité d'un conveyeur plat 6 formé de deux brins de tapis 7 et 8 renvoyés aux extrémités d'entrée 2 et de sortie 3 par des cylindres 9 et 10. Dans l'exemple représenté aux dessins, on voit donc que le transporteur fait saillie quelque peu au-delà de l'extrémité d'entrée 2 pour permettre le dépôt de produits à refroidir, soit manuel, soit automatique, alors que l'extrémité de sortie du transporteur au niveau de la section de sortie 3 permet un dégagement par chute libre le cas échéant repris par un autre transporteur des produits refroidis superficiellement.

La paroi supérieure ou voûte 12 du caisson allongé 1 sert de support par des moyens non représentés à une pluralité de rampes transversales telles que représentées en 13, 14, 15, 16, 17 et 18, chacune équipée elle-même d'une pluralité de buses de pulvérisation telles que représentées en 21, 22, 23 et 24. Ces buses sont à fonctionnement par pression, par exemple celles commercialisées par Spraying System du type TG03 ou TG07. Pour les raison d'écoulement de fluide, ces rampes transversales sont réunies et alimentées par un conduit d'alimentation 31, 32 respectivement. Ces deux conduits 31, 32 sont réunis à un conduit unique d'alimentation 35 raccordé par un conduit 36 (équipé d'un filtre 52) à une source non représentée de gas carbonique sous une pression comprise entre 6 et 30 bars à la température correspondant à l'état d'équilibre liquide vapeur du $CO_2$ à la pression considérée, par l'intermédiaire:

soit d'un conduit 41 à électrovanne 42 apte à fournir un débit nominal de gaz carbonique liquide;

soit par un conduit 43 à électrovanne 44 en série avec une vanne "pointeau" 45 réglée pour un débit faible d'au moins 30% inférieur au débit nominal, cette conduite 43 étant équipée en amont de l'électrovanne 44 d'un pot dégazeur 46;

soit par une conduite 47 équipée d'amont en aval d'un réchauffeur 48, d'un détendeur 49, d'un clapet anti-retour 50 et d'une électrovanne 51;

En fonctionnement, les produits sont, comme indiqué précédemment, placés sur le transporteur 6 se déplaçant selon la flèche F et, en régime permanent, une sonde de température non représentée réalise les opérations suivantes:

lorsque la température relevée dans le tunnel de réfrigération est supérieure à la température de consigne d'au moins un écart de température réglé entre 0,5°C et 15°C, la régulation est faite de façon à ce que les électrovannes 42 et 45 soient ouvertes, alors que l'électrovanne 51 est fermée. Dans ce cas, le débit nominal, c'est-à-dire le débit maximal prévu est transféré vers les buses de pulvérisation 24 par les conduits 31, 32, 13, 14, 15, 16, 17 et 18 et le refroidissement est intense;

lorsque la température a chuté à une valeur telle que son écart avec la température de consigne est relativement faible (toujours compris entre 0,5°C et 15°C), la vanne 42 se ferme: du gaz carbonique liquide à faible débit nettement plus faible se dirige vers les conduits 31 et 32 et parvient comme précédemment aux buses 21 et 24.

L'effet de refroidissement est notablement réduit et généralement la température maintenue à l'intérieure de l'écart de température imposée. Si cet écart de température avec la température de consigne devait se réduire à zéro ou bien si la température à l'intérieur du tunnel de réfrigération devait être inférieure à ladite température de consigne, l'électrovanne 45 se ferme et l'électrovanne 42 reste fermée, alors que l'électrovanne 51 s'ouvre, ce qui produit un débit de gaz carbonique réchauffé et sous basse pression, donc à l'état gazeux assurant un balayage permanent, même en l'absence de refroidissement, en sorte que toute formation de particules de neige carbonique solide susceptible de former obstruction est évitée.

Les buses de pulvérisation 21, 24 n'ont pas été décrites en détail, car elles sont connues en soi. Elles présentent cependant, comme indiqué précédemment, la particularité double, d'une part d'être dirigées toutes ves les produits à refroidir, c'est-à-dire perpendiculairement au tapis 7 du convoyeur 6, d'autre part d'avoir une section de sortie relativement étroite comprise entre 0,2 mm² et 1,13 mm², ce qui permet à la fois la formation de particules très fines de neige carbonique, dont les dimensions sont comprises entre 20 et 300, et une directivité de ces particules vers les produits à refroidir, du fait de l'absence de tout moyen de brassage à l'intérieur du tunnel. La distance entre buses et produit est le l'ordre de 150 à 300 millimètres. Les vitesses d'ejections des particules au niveau d'une buse sont:

pour une pression d'éjection de 15 bars, de l'ordre de 20 à 25 m/s à un distance de 50 mm, de l'ordre de 8 m/s à une distance de 250 mm.

pour une pression d'éjection de 18 bars, le l'ordre de 25 à 30 m/s à 50 mm, de l'ordre de 8 à 10 m/s à une distance de 250 mm.

**Revendications**

1. Procédé de refroidissement superficiel de produits alimentaires, du genre où l'on soumet, dans une zone confinée isolée thermiquement de l'ambiance, lesdits produits à l'action cryogénique de particules formées par détente de gaz carbonique sous pression et à l'état liquide au travers de buses orientées vers la surface moyenne offerte par les produits en cours de refroidissement, caractérisé en ce qu'on assure une sublimation quasi instantanée des particules solides du gaz carbonique au contact des produits en choisissant des buses du type à pulvérisation sous pression ayant une section d'éjection comprise entre 0,2 mm² et 1,13 mm² et une pression d'éjection comprise entre 6 et 30 bars produisant un jet composite de particules solides très fines, de tailles comprises entre 20 μm et 300 μm véhiculées rapidement dans un courant gazeux exclusivement composé de gaz carbonique résultant de ladite détente, le débit et la pression de gaz carbonique étant réglés pour produire un débit de particules solides fines inférieure à 0,5 kg/h par cm² de surface de produit, la durée de traitement étant comprise entre 0,5 mm et 5 mn (minutes) et en ce que le débit de gaz carbonique sous pression et à l'état liquide est asservi à la température relevée dans ladite zone confinée, l'asservissement rélisant un débit nominal de gaz carbonique liquide pour une température relevée supérieure à une écart faible, compris entre 0,5°C et 15°C, avec une température de consigne, une réduction de débit de gaz carbonique liquide d'au moins 30% dudit débit nominal lorsque la température relevée est comprise à l'intérieur dudit écart par excès ou par défaut, un débit de gaz carbonique liquide nul pour toute température inférieure à la température de consigne d'une valeur au moins égale audit écart, avec, dans ce dernier cas, délivrance au travers des buses d'un courant gazeux de gaz carbonique.

2. Tunnel de refroidissement superficiel de produits alimentaires, du genre comprenant un caisson d'isolation allongé avec une entrée et une sortie aux deux extrémités longitudinales, un transporteur plat, une pluralité de buses réparties en voûte dans ledit corps allongé, raccordées par conduite et vannes à un réservoir de gaz carbonique sous pression et toutes orientées vers le transporteur plat, caractérisé en ce que les dites buses ont des sections d'éjection comprise entre 0,2 et 1,13 mm² et en ce que la conduite d'alimentation en dioxyde de carbone se subdivise en trois conduites en parallèle incorporant chacune une électrovanne, la première fournissant le débit nominal, la seconde étant associée à une moyen de réduction de débit d'au moins 30%, la troisième étant associée successivement, d'aval en amont à une électrovanne, à un clapet anti-retour, à un détendeur manométrique et à un réchauffeur-vaporiseur.

**Patentansprüche**

1. Verfahren zum Kühlen der Oberfläche von Nahrungsmitteln, bei dem die genannten Produkte in einer gegen die Umgebung wärmeisolierten, abgeschlossenen Zone der Kältewirkung durch Teilchen ausgesetzt sind, die gebildet werden durch die Entspannung von unter Druck stehendem und in flüssigem Zustand befindlichem Kohlendioxid durch Düsen hindurch, die auf die von dem Produkt während des Kühlens dargebotene durchschnittliche Fläche gerichtet sind, dadurch gekennzeichnet, daß eine praktisch augenblickliche Sublimation der Festteilchen des Kohlendioxids bei Berührung der Produkte herbeigeführt wird, indem Druckzerstäubungsdüsen eingesetzt werden, die einen Ausstoßquerschnitt zwischen 0,2 mm² und 1,13 mm² aufweisen und mit einem Ausstoßdruck zwischen 6 und 30 Bar arbeiten, wodurch ein gemischter Strahl von sehr kleinen festen Teilchen in einer Größe zwischen 20 µm und 300 µm erzeugt wird, die schnell in einem Gasstrom mitgeführt werden, der ausschließlich aus von der genannten Entspannung herrührendem Kohlendioxid besteht, wobei der durchsatz und der Kohlendioxiddruck so geregelt werden, daß eine Menge von kleinen festen Teilchen von weniger als 0,5 kg/h je cm² der Produktoberfläche erzeugt wird und die Behandlungsdauer zwischen 0,5 mit und 5 min liegt, und daß der Durchsatz von unter Druck stehendem und flüssigem Kohlendioxid gesteuert wird von der in der genannten abgeschlossenen Zone ermittelten Temperatur, wobei die Steuerung einen Nenndurchsatz von flüssigem Kohlendioxid bei einer ermittelten Temperatur bewirkt, die um mehr als eine geringe, zwischen 0,5°C und 15°C liegende Spanne gegenüber einer Solltemperatur erhöht ist, einem um mindestens 30% des genannten Nenndurchsatzes verminderten Durchsatz von flüggigem Kohlendioxid bewirkt, wenn die ermittelte Temperatur um einen innerhalb der genannten Spanne liegenden Wert über oder unter der Solltemperatur liegt, einen Durchsatz Null von flüssigem Kohlendioxid bei jeder Temperatur bewirkt, die die Solltemperatur um einen Betrag unterschreitet, der mindestens gleich der genannten Spanne ist, wobei im letzteren Falle durch die Düsen ein Strom von gasförmigem Kohlendioxid abgegeben wird.

2. Kanal zum Kühlen der Oberfläche von Nahrungsmitteln, mit einem langgestreckten Isoliergehäuse mit einem Eingang und einem Ausgang an den beiden Längsenden, einem Flachförderer, einer Mehrzahl von im Dachraum des genannten langgestreckten Gehäuses verteilten Düsen, die durch Leitungen und Ventile mit einem unter Druck stehenden Kohlendioxidvorrat verbunden und alle dem Flachförderer zugewandt sind, dadurch gekennzeichnet, daß die genannten Düsen Ausstoßquerschnitte zwischen 0,2 mm² und 1,13 mm² aufweisen, und daß die Kohlendioxidzuleitung in drei parallellaufende, mit jeweils einem Magnetventil versehene Leitungen unterteilt ist, von denen die erste den Nenndurchsatz liefert, die zweite mit einer Einrichtung zur Herabsetzung des Durchsatzes um mindestens 30% versehen ist, die dritte hintereinander, in Richtung gegen die Strömung gesehen, ein Magnetventil, ein Rückschlagventil, ein Druckminderventil mit Manometer und eine Vorwärmer- und Verdampfereinrichtung aufweist.

**Claims**

1. A method for the surface cooling of food products, of the type in which the said products are subjected, within confined zones heat-insulated from the surroundings, to the cryogenic action of particles formed by the expansion of carbon dioxide gas under pressure and in the liquid state through nozzles directed toward the mean surface presented by the products in the course of being cooled, characterised in that an almost instantaneous sublimation of solid particles from the carbon dioxide gas in contact with the products is ensured by selecting nozzles, of the type providing atomisation under pressure, having a discharge cross-section comprised between 0.2 mm² and 1.13 mm² and a discharge pressure comprised between 6 and 30 bars generating a composite jet of very fine solid particles of sizes comprised between 20 and 300 µm carried rapidly within a gaseous flow composed exclusively of carbon dioxide gas resulting from the said expansion, the flow rate and pressure of carbon dioxide gas being controlled to produce a flow rate of fine solid particles smaller than 0.5 kg/h per $cm^2$ of product surface, the treatment period being comprised between 0.5 mn and 5 mn (minutes), and in that the rate of flow of carbon dioxide gas under pressure and in the liquid state is controlled by the temperature detected within the said confined zone, the control establishing a nominal flow rate of liquid carbon dioxide gas for a measured temperature exceeding a set temperature by a small deviation, comprised between 0.5°C and 15°C, a reduction of the flow rate of liquid carbon dioxide, by at least 30% of the said nominal flow rate when the measured temperature lies within the said deviation by excess or deficiency, a zero flow rate of liquid carbon dioxide gas for any temperature less than the set temperature by a value equal to at least the said deviation with, in this latter case, delivery of a gaseous flow of carbon dioxide through the nozzles.

2. A tunnel for the cooling of food products of the type comprising an elongated insulating chest with an inlet and an outlet at the two longitudinal extremities, a flat conveyor, a plurality of nozzles distributed overhead within the said elongated body, connected by conduits and valves to a tank of carbon dioxide under pressure and all directed towards the flat conveyor, characterised in that the said nozzles have discharge cross-sections comprised between 0.2 and 1.13 $mm^2$ and in that the carbon dioxide supply conduit is subdivided into three parallel conduits each incorporating an electromagnetic valve the first providing the nominal flow rate, the second being associated with means for reducing the flow rate by at least 30%, the third being associated successively, from downstream to upstream, with an electromagnetic valve, a non-return valve, a manometric pressure-reducing means and a heater-vaporiser.